# EUROPÄISCHE PATENTSCHRIFT

(11) **EP 0 523 433 B1**
(45) Veröffentlichungstag und Bekanntmachung des Hinweises auf die Patenterteilung: **27.03.1996**
(21) Anmeldenummer: 92110915.3
(22) Anmeldetag: 27.06.1992
(51) Int. Cl.: B65D 83/00, B65D 3/22, B31C 3/00

(54) **Verfahren zur Herstellung eines zylinderförmigen Verpackungsbehälters**
Method of manufacturing a cylindrically shaped packaging container
Procédé de fabrication d'un récipient d'emballage cylindrique

(30) Priorität: 17.07.1991 DE 4123743
(43) Veröffentlichungstag der Anmeldung: 20.01.1993
(73) Patentinhaber: SCHIEFERDECKER GmbH & Co. KG, D-40699 Erkrath (DE)
(72) Erfinder: Kirchberg, Karl, W-4010 Hilden (DE)
(74) Vertreter: Stenger, Watzke & Ring Patentanwälte

(56) Entgegenhaltungen:
- EP-A- 0 474 953
- DE-A- 3 237 634
- DE-B- 1 134 271
- FR-A- 2 218 192
- GB-A- 491 904

## Beschreibung

Die Erfindung betrifft ein Verfahren zur Herstellung eines zylinderförmigen Verpackungsbehälters aus einer tragenden, durch wendelförmiges Wickeln mindestens eines sich überlappenden Streifens, vorzugsweise aus Papier bestehenden Außenhülse und aus einer Innenhülse, die ebenfalls aus einem sich überlappenden Streifen eines geeigneten Auskleidungsmaterials, vorzugsweise Aluminiumfolie wendelförmig gewickelt ist, wobei der Streifen zur Bildung der Innenhülse auf seiner zur Wickelachse zeigenden Innenseite mit einer Beschichtung versehen und die einander überlappenden Teile dieses wendelförmig gewickelten Streifens miteinander verbunden werden. Ein gattungsgemäßes Verfahren nach dem Oberbegriff des Anspruchs 1 ist in der zum Stand der Technik zählenden DE-A-32 37 634 offenbart.

Bei dem bekannten Verfahren zur Herstellung eines zylinderförmigen Verpackungsbehälters aus einer tragenden Außenhülse und einer deren Auskleidung darstellenden Innenhülse wird die Innenhülse aus einem Streifen hergestellt, der aus einer auf eine Trägerschicht aus Papier aufgebrachten Aluminiumfolie besteht.

Über die Trägerschicht wird die Innenhülse mit der jeweils inneren Lage der Außenhülse verklebt, die aus mehreren wesentlich dickeren Streifen aus Papier oder Karton wendelförmig gewickelt wird. Um trotz der Herstellung der Innenhülse durch wendelförmiges Wickeln eines Streifens eine gasdichte Auskleidung des zylinderförmigen Verpackungsbehälters zu schaffen, sind die einander überlappenden Ränder des die Innenhülse bildenden Streifens miteinander verleimt, und zwar mit Hilfe eines in den Überlappungsbereich eingebrachten Verleimungsstreifens.

Der Erfindung liegt deshalb die **Aufgabe** zugrunde, die zumindest zu einem Teil aus Aluminium bestehende Innenhülse nach Gebrauch des Verpackungsbehälters getrennt von dem aus Papier oder Karton bestehenden Material der tragenden Außenhülse zu entsorgen.

Die Lösung dieser Aufgabe ist durch die im Kennzeichenteil des Anspruchs 1 definierten Merkmale gekennzeichnet.

Durch das erfindungsgemäße Vefahren entsteht ein zylinderförmiger Verpackungsbehälter mit einer eigenständigen Außenhülse und einer eigenständigen Innenhülse, wobei die Außenhülse mit der Innenhülse nicht verklebt, sondern ausschließlich kraftschlüssig verbunden ist. Die Außenhülse umschließt somit die Innenhülse eng, aber verschiebbar, so daß nach dem Entleeren des Verpackungsbehälters die Innenhülse auf einfache Weise als ganzes aus der Außenhülse herausgezogen werden kann. Hierbei wird jegliche Verschmutzung der verbleibenden Außenhülse durch in der Innenhülse eventuell vorhandene Reste des Verpackungsgutes vermieden. Die Außenhülse kann demzufolge ohne die Gefahr einer Kontaminierung getrennt von der Innenhülse entsorgt werden, die zwar beim Trennvorgang ihre zylinderförmige Form beibehält, anschließend aber durch einfaches Zusammendrücken auf ein sehr geringes Volumen komprimiert werden kann.

Da die Außenhülse vorzugsweise aus mehreren Streifen aus Papier oder Pappe besteht, die miteinander verklebt sind, kann sie problemlos einer Wiederverwertung zugeführt werden. Die Innenhülse wird vorzugsweise aus einem Streifen aus Aluminiumfolie hergestellt, die in bekannter Weise mit einer Trägerschicht aus Papier kaschiert sein kann und auf ihrer die Innenseite der Auskleidung bildenden Fläche mit einer Beschichtung aus heißsiegelfähigem Kunststoff versehen ist. Trotz der Trägerschicht aus Papier und der Kunststoffbeschichtung kann das Aluminium der Innenhülse durch Einschmelzen zurückgewonnen werden. Sollte dies im besonderen Fall aufgrund einer besonderen Verschmutzung durch Reste des Verpackungsgutes nicht möglich sein, ergibt sich durch die erhebliche Komprimierfähigkeit der von der Außenhülse getrennten Innenhülse ein sehr geringes, auf einer Sondermülldeponie zu entsorgendes Volumen.

Das erfindungsgemäße Verfahren kann somit auf bekannten Spiralhülsenwickelmaschinen durchgeführt werden; auch eine Unterteilung des hierbei entstehenden Rohres in der Länge der jeweils herzustellenden Behälter entsprechende Abschnitte entspricht dem bekannten Stand der Technik.

Der zylinderförmige Verpackungsbehälter der Erfindung unterscheidet sich von dem bekannten, eingangs erläuterten Verpackungsbehälter dadurch, daß die jeweils eigenständige Außenhülse und Innenhülse auf ihrer gesamten zylinderförmigen Berührungsfläche ausschließlich kraftschlüssig miteinander verbunden sind und der Verschluß an seinem Innenrand ausschließlich mit der Innenhülse verbunden ist. Bei diesem Verschluß handelt es sich üblicherweise um einen mit einem Schraubstutzen versehenen Deckel, der auf seiner Innenseite ebenfalls mit einer Beschichtung, vorzugsweise aus heißsiegelfähigem Kunststoff versehen ist, so daß er problemlos an seinem Innenrand mit der Beschichtung der Innenhülse verbunden werden kann. Sofern die Innenhülse unter Verwendung von Aluminiumfolie hergestellt worden ist, sollte auch der Deckel aus Aluminium oder einem Aluminium-Verbundmaterial bestehen, um eine gemeinsame Wiederverwertung zu ermöglichen.

Mit der Erfindung wird schließlich vorgeschlagen, die Außenhülse mit mindestens einer axial verlaufenden Perforation zu versehen, so daß der zylinderförmige Verpackungsbehälter der Erfindung nach seinem Entleeren auf einfache Weise dadurch in seine beiden Hauptbestandteile aufgeteilt werden kann, daß die Außenhülse entlang der Perforation aufgetrennt und die Innenhülse entnommen werden kann.

Auf der Zeichnung sind drei Ausführungsbeispiele eines erfindungsgemäßen Verpackungsbehälters und das erfindungsgemäße Verfahren zu seiner Herstellung schematisch dargestellt. Es zeigt:
- Fig. 1: einen Längsschnitt durch eine erste Ausführungsform des Verpackungsbehälters,
- Fig. 2: eine vergrößerte Darstellung des in Fig. 1 eingekreisten Details II,
- Fig. 3: eine schematische Darstellung des Herstellungsverfahrens,
- Fig. 4: einen vergrößerten Ausschnitt gemäß dem eingekreisten Detail IV in Fig. 3,
- Fig. 5: einen Längsschnitt durch eine zweite Ausführungsform des Verpackungsbehälters,
- Fig. 6: eine weitere Ausführungsform des zylinderförmigen Grundkörpers des Verpackungsbehälters und
- Fig. 7: eine Stirnansicht zu Fig. 6.

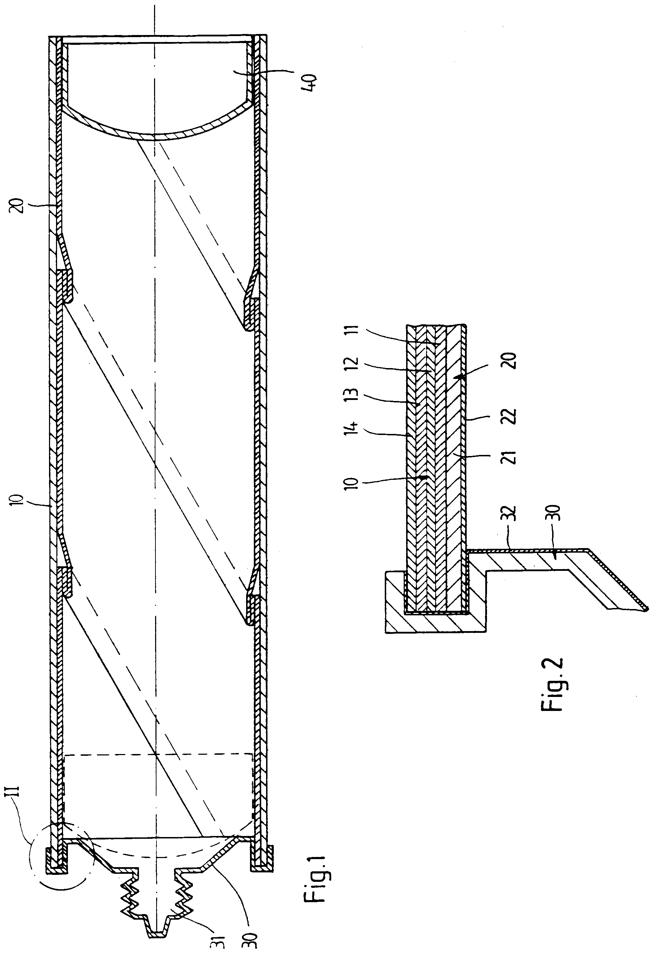

Der in Fig. 1 im Längsschnitt und in Fig. 2 mit einem vergrößerten Detailschnitt dargestellte Verpackungsbehälter besteht aus einer Außenhülse 10 und einer Innenhülse 20 mit jeweils kreiszylindrischem Querschnitt. Der sich hierdurch ergebende zylinderförmige Verpackungsbehälter ist beim Ausführungsbeispiel nach Fig. 1 an einem Ende mit einem Verschluß 30 versehen, der in der Art eines Deckels ausgeführt ist und mittig einen mit Außengewinde versehenen Schraubstutzen 31 aufweist, auf den eine auf der Zeichnung nicht dargestellte Auspreßdüse aufschraubbar ist. In das andere Ende des zylinderförmigen Verpackungsbehälters ist ein Kolben 40 eingesetzt, durch den das in den Verpackungsbehälter eingebrachte Material, beispielsweise eine Dichtungsmasse durch den Schraubstutzen 31 ausgepreßt werden kann. Die Endstellung des den Verpackungsbehälter in der Ausgangsstellung verschließenden Kolbens 40 ist in Fig. 1 gestrichelt gezeichnet.

Die Detaildarstellung in Fig. 2 läßt erkennen, daß die Außenhülse 10 des Verpackungsbehälters aus insgesamt vier Lagen, beispielsweise aus Papier oder Karton besteht. Diese Lagen werden durch wendelförmiges Aufwickeln von vier Papierstreifen 11,12,13,14 erzeugt, die einander überlappen und die miteinander verklebt werden, so daß sich eine eigenständige Außenhülse 10 ergibt. Auch die Innenhülse 20 ist eigenständig, d.h. nicht mit der Außenhülse 10 verklebt. Sie wird durch das wendelförmige Wickeln eines sich überlappenden Streifens 21 erzeugt, der auf seiner Innenseite mit einer Beschichtung 22, vorzugsweise aus heißsiegelfähigem Kunststoff versehen ist. Auch der in der Art eines Deckels ausgebildete Verschluß 30 ist auf seiner Innenseite mit einer Beschichtung 32 aus heißsiegelfähigem Kunststoff versehen. Der Verschluß 30 ist im Randbereich mehrfach umgebördelt, so daß er das stirnseitige Ende von Außenhülse 10 und Innenhülse 20 umschließt. In diesem Randbereich ist der Verschluß 30 über seine Beschichtung 32 mit der Beschichtung 22 der Innenhülse 20 durch Heißsiegeln verbunden.

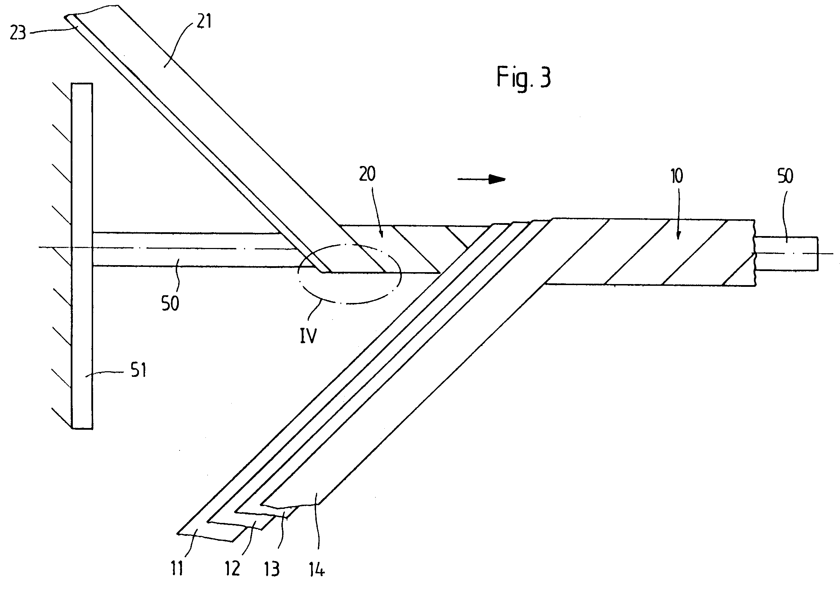

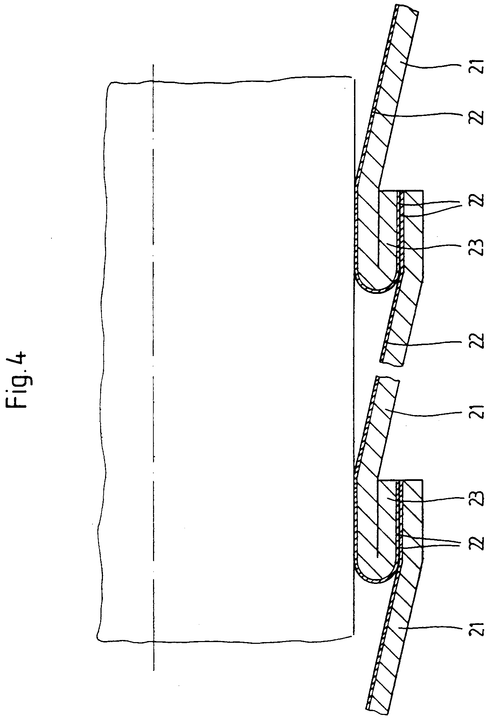

Das Verfahren zur Herstellung des in den Figuren 1 und 2 dargestellten Verpackungsbehälters soll nunmehr anhand der Figuren 3 und 4 erläutert werden.

Die Figur 3 zeigt einen feststehenden Dorn 50, der an einem Dornträger 51 einer im übrigen nicht dargestellten, bekannten Spiralhülsenwickelmaschine angeordnet ist. Diesem Dorn 50 wird der zur Bildung der Innenhülse 20 bestimmte Streifen 21 aus Aluminiumfolie unter einem Winkel von 45° zugeführt. Durch einen ebenfalls nicht dargestellten Riemen wird dieser Streifen 21 wendelförmig auf den Dorn 50 aufgewickelt, so daß eine Art Rohr entsteht, das sich in Richtung des in Fig. 3 eingezeichneten Pfeiles bewegt. Diese Wickeltechnik zur Herstellung von Rohren ist seit vielen Jahrzehnten bekannt.

Um aus dem wendelförmig gewickelten, sich überlappenden Streifen 21 eine eigenständige Innenhülse 20 zu bilden, die außerdem gas- und/oder flüssigkeitsdicht ist, wurde der Streifen 21 auf seiner dem Dorn 50 zugewandten Innenseite mit einer Beschichtung 22 versehen. Bei dieser Beschichtung 22 handelt es sich vorzugsweise um einen heißsiegelfähigen Kunststoff, der zwar mit sich selbst bzw. einem entsprechenden Kunststoff verbindbar ist, nicht jedoch mit unbeschichtetem anderem Material. Damit die aus dem wendelförmig gewickelten Streifen 21 entstehende Innenhülse 20 gas- bzw. flüssigkeitsdicht wird, wird gemäß den Figuren 3 und 4 der hintere Rand 23 des die Innenhülse 20 bildenden Streifens 21 vor dem Wickelvorgang um 180° nach vorn gefaltet, so daß sich die in Fig. 4 gezeigte Situation ergibt. Die Darstellung läßt erkennen, daß auf diese Weise die Beschichtung 22 des nach vorn umgelegten hinteren Randes 23 nach außen weist, so daß sie mit der Beschichtung 22 am vorderen Rand der nachfolgenden Windung des Streifens 21 in Berührung kommt. Im Überlappungsbereich liegt demgemäß die Beschichtung 22 des umgefalteten hinteren Randes 23 unter der Beschichtung 22 des vorderen Randes, so daß der wendelförmig gewickelte Streifen 21 insgesamt durch Heißsiegeln zur Innenhülse 20 verbunden werden kann. Es entsteht somit eine eigenständige, gas- und/oder flüssigkeitsdichte Innenhülse 20, und zwar auch dann, wenn der Streifen 21 aus einer Aluminiumfolie und einer zugehörigen Trägerschicht aus Papier besteht.

Auf dieser Innenhülse 20 wird anschließend sofort die Außenhülse 10 erzeugt. Zu diesem Zweck wird dem Dorn 50 das zur Bildung der Außenhülse 10 bestimmte Material zugeführt, beim Ausführungsbeispiel die vier Papierstreifen 11,12,13 und 14. Diese werden vor dem Zuführen auf den Dorn 50 mit Leim versehen, so daß die sich selbst und einander überlappenden Papierstreifen 11,12,13,14 insgesamt zu einer eigenständigen Außenhülse 10 verleimt werden. Das Aufbringen dieser Außenhülse 10 auf der zuvor hergestellten Innenhülse 20 erfolgt ohne Zugabe von Leim oder sonstigem Bindemittel und ohne Zugabe irgendwelcher zusätzlicher Klebestreifen, so daß die Außenhülse 10 ausschließlich kraftschlüssig auf die Innenhülse 20 aufgewickelt wird. Das enge Aneinanderliegen von eigenständiger Außenhülse 10 und eigenständiger Innenhülse 20 reicht aus, diese beiden Teile des auf dem Dorn 50 gewickelten Rohres relativ zueinander festzulegen, zumal die Überlappungsbereiche eine gewisse Erhöhung der in der Trennfläche herrschenden Reibung bewirken.

Das fortlaufend auf dem Dorn 50 entstehende Rohr wird in einzelne Abschnitte aufgetrennt, die wiederum in Einzelabschnitte aufgetrennt werden können, die der Länge des jeweils gewünschten Verpackungsbehälters entsprechen. Selbstverständlich ist es möglich, einen derartigen Behälter auf der Außenseite mit einem Etikett zu versehen.

Zur Fertigstellung des erfindungsgemäßen Verpackungsbehälters werden die einzelnen Abschnitte am einen Ende mit dem deckelartigen Verschluß 30 gemäß Fig. 1 versehen, anschließend gefüllt und danach gemäß Fig. 1 durch einen Kolben 40 verschlossen. Da der Verschluß 30 auf seiner Innenfläche ebenfalls mit einer Beschichtung 32 versehen ist, kann der Verschluß 30 ohne weiteres an seinem Innenrand über die Beschichtungen 32 bzw. 22 mit der Innenhülse 20 verbunden werden.

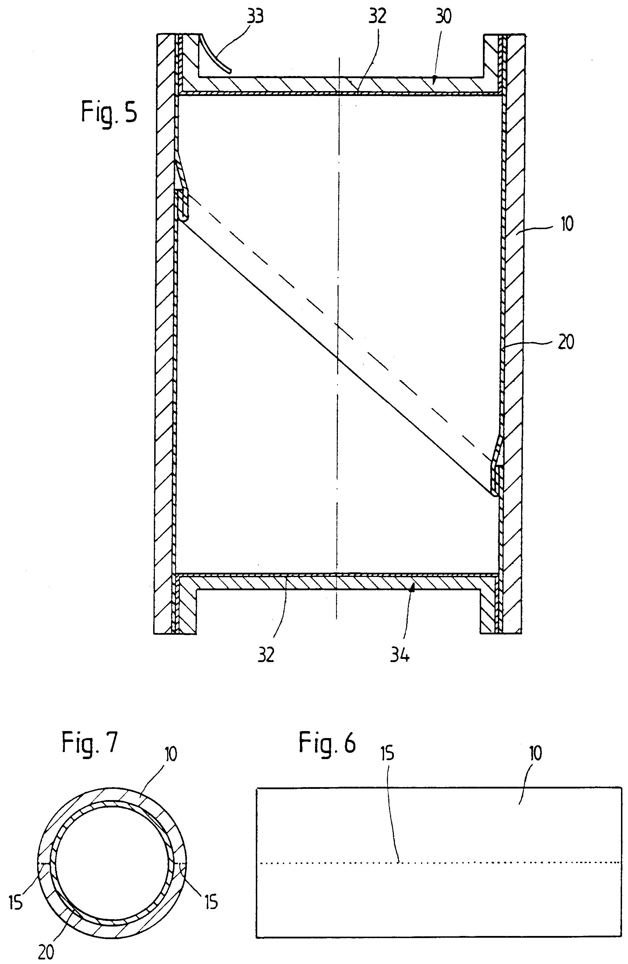

Eine alternative Ausführungsform eines derartigen Verpackungsbehälters zeigt Fig. 5. Diese Darstellung läßt erkennen, daß anstelle eines mit einem Schraubstutzen 31 versehenen Verschlusses 30 auch ein einfacherer, mit einer Aufreißlasche 33 versehener Verschlußdeckel und anstelle des Kolbens 40 ein Boden 34 verwendet werden kann. Auch in diesem Fall werden der mit der Aufreißlasche 33 versehene Verschluß 30 und der Boden 34 auf ihrer Innenseite mit einer Beschichtung 32 versehen, über die diese Teile mit der Beschichtung 22 der Innenhülse 20 verbunden werden können.

Um die aus den vier Papierstreifen 11,12,13 und 14 bestehende Außenhülse 10 getrennt von der gegebenenfalls kontaminierten Innenhülse 20 entsorgen zu können, ist es nach Entleeren des Verpackungsbehälters lediglich erforderlich, die auf ihrer Außenseite nicht mit der Innenseite der Außenhülse 10 auf irgendeine Weise verklebte oder verschweißte Innenhülse 20 in axialer Richtung aus der Außenhülse 10 herauszuziehen, und zwar mit Hilfe des Verschlusses 30, der ausschließlich mit der Innenhülse 20 verbunden ist. Dieses axiale Herausziehen der hierbei ihre Rohrform beibehaltenden Innenhülse 20 wird erleichtert, wenn zuvor die Außenhülse 10 von Hand geringfügig zusammengepreßt worden ist, um eine örtliche Trennung zwischen Innenhülse 20 und Außenhülse 10 zu bewirken. Diese Trennung ergibt sich aufgrund der Tatsache, daß die bei einem derartigen Walkvorgang verformte Innenhülse aufgrund der Verwendung der Aluminiumfolie ihre verformte Form beibehält, wogegen die dickere, aus Papier bestehende Außenhülse 10 in ihre Ausgangslage zurückkehrt. Mit Hilfe des Verschlusses kann somit die Innenhülse 20 sehr leicht aus der Außenhülse 10 in axialer Richtung herausgezogen werden.

Die voneinander getrennten Hülsen 10 und 20 können anschließend getrennt einer Wiederverwertung oder Entsorgung zugeführt werden. Sollte eine Wiederverwertung der Innenhülse 20, insbesondere wegen deren Kontaminierung nicht möglich sein, kann sie auf einen Bruchteil ihres ursprünglichen Volumens komprimiert werden, so daß sich das einer Sondermülldeponie zuzuführende Volumen erheblich reduzieren läßt.

Die Figuren 6 und 7 zeigen schließlich eine weitere Ausgestaltungsmöglichkeit des Verpackungsbehälters. In diesem Fall ist die Außenhülse 10 mit mindestens einer axial verlaufenden Perforation 15 versehen, die es nach dem Entleeren des Verpackungsbehälters gestattet, die eigenständige Außenhülse 10 aufzubrechen und die Innenhülse 20 unzerstört zu entnehmen. Eine derartige Perforation 15 kann ohne weiteres vor dem Etikettieren des Verpackungsbehälters eingebracht werden.

## Patentansprüche

1. Verfahren zur Herstellung eines zylinderförmigen Verpackungsbehälters aus einer tragenden, durch wendelförmiges Wickeln mindestens eines sich überlappenden Streifens (11,12,13,14), vorzugsweise aus Papier bestehenden Außenhülse (10) und aus einer Innenhülse (20), die ebenfalls aus einem sich überlappenden Streifen (21) eines geeigneten Auskleidungsmaterials, vorzugsweise Aluminiumfolie wendelförmig gewickelt ist, wobei der Streifen (21) zur Bildung der Innenhülse (20) auf seiner zur Wickelachse zeigenden Innenseite mit einer Beschichtung (22) versehen und die einander überlappenden Teile dieses wendelförmig gewickelten Streifens (21) miteinander verbunden werden, wobei der hintere Rand (23) des die Innenhülse (20) bildenden, auf der Innenseite mit der Beschichtung (22) versehenen Streifens (21) vor dem Wickelvorgang um 180° nach vorn gefaltet und mittels der auf diese Weise nach außen weisenden Beschichtung (22) mit dem vorderen Rand der nachfolgenden Windung des Streifens (21) über dessen Beschichtung (22) verbunden wird, dadurch gekennzeichnet, daß auf die derart hergestellte Innenhülse (20) mindestens ein Streifen (11,12,13,14) zur Bildung der Außenhülse (10) ausschließlich kraftschlüssig wendelförmig aufgewickelt wird, wobei dieser Streifen (11,12,13,14) ausschließlich mit sich selbst in seinem Überlappungsbereich bzw. bei Verwendung mehrerer Streifen zur Bildung der Außenhülse (10) mit diesen Streifen (11,12,13,14) durch vor dem Wickelvorgang aufgetragenes Verbindungsmaterial verbunden wird, daß die gewickelten und kraftschlüssig verbundenen Innen- und Außenhülsen in entsprechende Einzelabschnitte mit der Länge eines gewünschten Verpackungsbehälters abgelängt werden, und daß an wenigstens einem Ende eines Einzelabschnittes ein Verschluß (30,40) angeordnet und ausschließlich mit der Innenhülse verbunden wird.

2. Verfahren nach Anspruch 1, dadurch gekennzeichnet, daß die Beschichtung (22) des die Innenhülse (20) bildenden Streifens (21) durch einen heißsiegelfähigen Kunststoff gebildet wird.

3. Verfahren nach Anspruch 1 oder 2, dadurch gekennzeichnet, daß das Material zur Verbindung des oder der die Außenhülse (10) bildenden Streifen (11,12,13,14) durch einen Klebstoff gebildet wird.

4. Verfahren nach einem der Ansprüche 1 bis 3, dadurch gekennzeichnet, daß die Außenhülse (10) mit mindestens einer axial verlaufenden Perforation (15) versehen wird.

## Claims

1. Method of producing a cylindrical packaging container from a self-supporting outer sleeve (10), preferably consisting of paper, formed by spiral wrapping of at least one overlapping strip (11, 12, 13, 14), and from an inner sleeve (20) which is likewise spirally wrapped from an overlapping strip (21) of a suitable lining material, preferably aluminium foil, the strip (21) for forming the inner sleeve (20) being provided with a coating (22) on its inner side pointing towards the wrapping axis, and the mutually overlapping parts of this spirally wrapped strip (21) being joined together, the rear edge (23) of the strip (21), forming the inner sleeve (20) and provided with the coating (22) on the inner side, being folded forwards through 180° prior to the wrapping operation and being joined, by means of the coating (22) which in this manner faces outwards, to the front edge of the following winding of the strip (21) via the coating (22) thereof, characterized in that at least one strip (11, 12, 13, 14) for forming the outer sleeve (10) is spirally wrapped, solely in a non-positive manner, around the inner sleeve (22) produced in the above manner, the said strip (11, 12, 13, 14) being joined solely to itself in its overlapping region or, when a plurality of strips are used to form the outer sleeve (10), to the said stripe (11, 12, 13, 14) by means of joining material applied prior to the wrapping operation, in that the wrapped and non-positively joined inner and outer sleeves are cut to length to form appropriate individual sections having the length of a desired packaging container, and in that a closure (30, 40) is arranged at least at one end of an individual section and is joined solely to the inner sleeve.

2. Method according to Claim 1, characterized in that the coating (22) of the strip (21) forming the inner sleeve (20) is formed by a heat-sealable plastic.

3. Method according to Claim 1 or 2, characterized in that the material for joining the strip or strips (11, 12, 13, 14) forming the outer sleeve (10) is formed by an adhesive.

4. Method according to one of Claims 1 to 3, characterized in that the outer sleeve (10) is provided with at least one axially extending perforation (15).

## Revendications

1. Procédé de fabrication d'une boîte d'emballage de forme cylindrique, à partir d'un tube extérieur (10) porteur, fait de préférence en papier par enroulement en spirale d'au moins une bande à recouvrement (11, 12, 13, 14), et d'un tube intérieur (20), qui est également enroulé en forme de spirale à partir d'une bande à recouvrement (21) en une matière de revêtement appropriée, de préférence une feuille d'aluminium, la bande (21) destinée à constituer le tube intérieur (20) étant pourvue, sur sa face interne tournée vers l'axe d'enroulement, d'une couche de revêtement (22) et les parties à chevauchement de cette bande enroulée en forme de spirale (21) étant reliées les unes aux autres, le bord arrière (23) de la bande (21) constituant le tube intérieur (20) et revêtu sur sa face interne de la couche de revêtement (22) étant plié à cet effet de 180° vers l'avant, préalablement à l'opération d'enroulement, et étant relié, au moyen de la couche de revêtement (22) ainsi tournée vers l'extérieur, au bord avant de la spire suivante de la bande (21) par l'intermédiaire de la couche de revêtement (22) de celle-ci, caractérisé en ce que, sur le tube intérieur (20) ainsi fabriqué, au moins une bande (11, 12, 13, 14), destinée à constituer le tube extérieur (10) est enroulée en forme de spirale exclusivement par adhérence, cette bande (11, 12, 13, 14) étant reliée exclusivement à elle-même dans sa zone de chevauchement, ou bien, lors d'une utilisation de plusieurs bandes pour former le tube extérieur (10), à ces bandes (11, 12, 13, 14), par une matière de liaison, appliquée avant l'opération d'enroulement en ce que les tubes intérieur et extérieur enroulés et fixés par adhérence sont tronçonnés en des segments individuels à la longueur d'une boîte d'emballage désirée, et en ce que au moins à une extrémité d'un segment individuel, il est prévu une fermeture (30, 40), qui est reliée exclusivement au tube intérieur.

2. Procédé selon la revendication 1, caractérisé en ce que la couche de revêtement (22) de la bande (21) constituant le tube intérieur (20) est constituée par une matière plastique thermosoudable.

3. Procédé selon la revendication 1 ou 2, caractérisé en ce que la matière servant à relier la bande ou les bandes (11, 12, 13, 14) formant le tube extérieur (10) est constituée par un adhésif.

4. Procédé selon l'une des revendications 1 à 3, caractérisé en ce que le tube extérieur (10) est pourvu d'au moins une perforation (15) s'étendant axialement.
